# EUROPEAN PATENT SPECIFICATION

(11) **EP 0 983 325 B1**
(45) Date of publication and mention of the grant of the patent: **06.03.2002**
(21) Application number: 98921381.4
(22) Date of filing: 29.05.1998
(51) Int. Cl.: C09J 123/00, C09J 11/00

(54) **AN ADHESIVE AGENT AND USE OF SUCH ADHESIVE AGENT**
EIN KLEBSTOFFREAGENZ UND VERWENDUNG EINES SOLCHEN
AGENT ADHESIF ET UTILISATION DE CET AGENT ADHESIF

(30) Priority: 30.05.1997 DK 63597
(43) Date of publication of application: 08.03.2000
(73) Proprietor: COLOPLAST A/S, 3050 Humlebaek (DK)
(72) Inventor: NIELSEN, Anders, Christian, DK-2200 Koebenhavn N (DK)
(74) Representative: Nilausen, Kim
(86) International application number: DK9800228
(87) International publication number: WO9854268

(56) References cited:
- US-A- 4 367 732
- US-A- 5 262 216
- FILE WPI, Accession No. 95-145094, ICS KK., "Pressure Sensitive Adhesive Compsn. for Masking Tape, Sticking Plasters, etc. - obtd. by Making Hydrophilic Polymer Contain, in Pressure Sensitive Adhesive, Hydrophobic Base Polymer"; & JP,A,07 070 545 (14-03-95) DW9519.

## Description

### FIELD OF THE INVENTION

The invention relates to a pressure sensitive adhesive composition suitable for application to human or animal skin, to a method for preparing such adhesives and the use of such adhesive for the preparation of a wound dressing or an adhesive wafer for an ostomy appliance or the use of the adhesive agent for securing of and sealing around ostomy bandages, for securing wound dressings, for securing of devices for collecting urine, wound-drainage bandages, orthoses and prostheses and for protection skin areas and parts of the body against pressure, impacts and friction and to wound dressings or ostomy appliances comprising such adhesive composition.

### BACKGROUND OF THE INVENTION

Various skin adhesive agents are used today for the above mentioned purposes.

A very widespread embodiment of skin adhesive agents comprises a self-adhesive elastomeric matrix, in which water-absorbing, swelling particles, the so-called hydrocolloids, are dispersed.

Adhesive compositions comprising hydrocolloids have been known for many years. US patent No. 3,339,549 discloses a blend of a rubbery elastomer such as polyisobutylene and one or more water soluble or water swellable hydrocolloids such as a powdery mixture of pectin, gelatine and carboxymethylcellulose. The adhesive mass has a water-insoluble film applied to one surface. A composition of this type is available commercially from E.R. Squibb & Sons Inc. under the trademark "Stomadhesive" and is used as a skin barrier around stomas to prevent skin breakdown by the corrosive fluids discharged by the stoma.

Such adhesive systems are characterised by a high degree of compounding (content of fillers) but, nevertheless, still has a sufficient plasticity and cohesion to wet a skin surface relatively rapidly and to conserve cohesion. This has been achieved using different adhesive systems, the majority of which falling in two main groupings according to the polymer of the adhesive matrix constituting the main difference and determining the properties of the base polymer.

One system comprises styrene block copolymers. The styrene block copolymers are normally three-block copolymers having a centre block typically consisting of polyisoprene, polybutadiene, or a copolymer of ethylene and propylene or 1-butene. The adhesiveness is obtained by plastification using a resin, an oil or an ester plasticizer. Such adhesives are e.g. disclosed in US patent No. 4,367,732 or in British patent No. GB 2,089,351 B.

The other system typically comprises polyisobutylene (FIB). A combination of a low molecular PIB and a high molecular PIB is often used, optionally combined with a styrene block copolymer. The adhesiveness of these formulations may also be modified by adding a resin, an oil or an ester plasticizer. Such adhesives are e.g. disclosed in US patents Nos. 4,551,490 or 4,477,325 or in European patent application No. EP 0 122 344.

The difference between the two types of adhesives is reflected in the viscoelastic behaviour of the base polymer. It is well known that PIB will flow over shorter or longer time which results in an increased ability to wet a surface over the time and consequently higher peel-values - after a sufficiently long time of rest on the substrate. On the contrary, the initial adhesiveness as determined by a tack-test is not good. Furthermore, the adhesives are characterised by their plastic or mouldable (non-memory) properties.

The styrene block copolymers, on the contrary, typically have elastic (memory) properties due to the phase-separated blocks of styrene in the block copolymer cross-linking the structure. The immediate initial adhesiveness is generally better than for the PIB-systems due to the fact that the styrene block copolymers normally are heavily modificated with i.a. resins which especially improves the initial tack.
Hydrocolloids are used in both systems. Suitable hydrocolloids are naturally occurring hydrocolloids such as guar, locust bean gum (LBG), pectin, alginates, chitosans, gelatine, xanthan or karaya, semisynthetic hydrocolloids such as cellulose derivatives (e.g. salts of carboxymethylcellulose, methylcellulose and hydroxypropylmethylcellulose), sodium starch glycolate and synthetic hydrocolloids such as polyvinylalcohol or polyethylene glycol.

In combination with many applications on wounds after surgical interventions it is necessary to use a sterilised adhesive or wound dressing. The sterilisation may be carried out by radiation, using ethylene oxide or by autoclaving using steam. Neither ethylene oxide nor autocalving is normally suitable for use in combination with adhesives containing hydrocolloids due to the risk of absorption of moisture during this process. Thus, adhesives comprising hydrocolloids can normally only endure sterilisation in the packaging for the finished product.

When using radiation for streilisation, polyisobutylene is probably degraded. This is reflected in cohesive rupture by peeling and increased cold flow. The styrene block copolymers, on the contrary, cross-link physically giving rise to more hard adhesives, a drastic reduction of the peel and the immediate tack-feel.

Thus, there is still a need for adhesive materials, especially for wound care and ostomy care, which adhesive materials show improved viscoelastic properties which are better conserved during sterilisation and which show a very high degree of skin-friendlyness.

It has surprisingly been found that a new type of polymers, the amorphous poly-α-olefins in a very high degree show physical properties being equivalent to the properties of PIB-polymers with respect to plastic properties and at the same time are apt for incorporation in pressure sensitive adhesives and pastes for use on human skin and which additionally do not exhibit the same disadvantages as the PIB-based adhesives on sterilisation. Thus, it is to a higher degree possible to combine the favourable plastic and wetting properties of PIB with the better resistance of the styrene block copolymers against radiation sterilisation.

Normally are olefin-based plastic adhesives based on the viscous polyisobutylene, often in admixture of constituents of different molecular weights for obtaining a suitable combination of wetting properties within a reasonably short time and a good cohesion in the adhesive matrix.

The amorphous poly-α-olefins is a relatively new group of materials, the first materials were marketed in the beginning of the 1990ies and is now used in various hot melt adhesives. In Japanese patent publications No. JP 07-070545 and in US patent No. US 5,262,216 is disclosed use of poly-α-olefins pressure sensitive adhesives for medical tapes suitable for adhering e.g. an electrode or a wound dressing, but there is no disclosure of using poly-α-olefins for the preparation of adhesives comprising hydrocolloids for use as adhesives for direct contact with wounds or for sealing of ostomy appliances.

In EASTMAN publication No. 60 it is stated that poly-α-olefins may be used for replacing polyisobutylens in hot melt adhesives but this reference is silent with respect to the use of poly-α-olefins in pressure sensitive skin adhesives conatining hydrocolloids.

It is an object of the invention to provide plastic PiB-like adhesives or pastes based on one or more amorphous poly-α-olefins which show improved properties and conserve their properties during sterilisation using radiation sterilisation.

### BRIEF DESCRIPTION OF THE INVENTION

The present invention relates a pressure sensitive adhesive composition containing hydrocolloids in the form of discrete particles.

Furthermore, the invention relates to a method for preparing a pressure sensitive adhesive composition containing hydrocolloids in the form of discrete particles.

The invention also relates to a an ostomy appliance comprising a pressure sensitive adhesive for securing the same to the side of an ostomate, said adhesive being an adhesive composition containing hydrocolloids in the form of discrete particles.

Still further, the invention relates to a wound dressing comprising a pressure sensitive adhesive composition containing hydrocolloids in the form of discrete particles.

Yet further, the invention relates to a paste skin or tissue modelling, e.g. for wound care or for ostomy care comprising a pressure sensitive adhesive composition containing hydrocolloids in the form of discrete particles.

The invention also relates to the use of one or more amorphous poly-α-olefins for the preparation of a pressure sensitive adhesive containing hydrocolloids in the form of discrete particles for use for securing of and sealing around ostomy bandages, for securing wound dressings, for securing of devices for collecting urine, wound-drainage bandages, orthoses and prostheses and for protection skin areas and parts of the body against pressure, impacts and friction.

### DETAILED DESCRIPTION OF THE INVENTION

In a first aspect, the invention relates to a pressure sensitive adhesive composition containing hydrocolloids in the form of discrete particles and wherein the adhesive composition comprises a matrix comprising one or more amorphous poly-α-olefins.

The advantage of using amorphous poly-α-olefins is that they render it possible to combine the advantageous properties of PIB with the advantageous properties of styrene block copolymers avoiding the undesirable properties of the polybutylenes.

Thus, one major problem which has been encountered with conventional adhesive compositions comprising hydrocolloids is their susceptibility to breakdown upon exposure to body fluids. When the compositions are used as skin barriers, e.g., around stomas, absorption of fluid is desirable, but excessive swelling causes the composition to lose its integrity opening for leaks and the barrier must be replaced more often than is desirable from a skin protection point of view, and very often, a residue remains on the skin, which in many cases is difficulty to remove. Another problem is an extensive change of physical properties shows superior physical properties and shows an extensive resistance to change of properties after sterilisation by radiation often seen using adhesive compositions based on polyisobutylenes.

The adhesive compositions of the invention show superior physical propertiesand show an extensive resistance to change of properties after sterilisation by radiation.
Thus, the following advantages are obtained:
- the poly-α-olefins combine desirable properties of PIB, viz. a combination of a low T_{G} combined with an amorphous state;
- Due to the wider possible degree of variation of the composition of the monomers in amorphous poly-α-olefins, a wider spectrum of variation of the plasticity of the pure polymers is obtainable enabling the production of adhesives requiring a lesser degree of modification using low-molecular components which may migrate and influence the skin or a wound after a long period of contact;
- It is possible to obtain a desirable one-dimensional swelling in an aqueous environment by using a combination of a high-molecular and a low-molecular poly-α-olefin. When using a single poly-α-olefin having a medium-molecular weight, the swelling of the adhesive is more isotropic in three dimensions upon absorption of moisture, and there is an increased tendency for the adhesive to release the hold of the substrate;
- The cohesion may be varied by adjusting the proportion between low-molecular and high-molecular constituent. The cohesion may also be adjusted by compounding the poly-α-olefin with SEBS, SEPS, SIS, SBS or other styrene blockcopolymer. Such compounding may imply higher demands on the resin used which may assist in improving the compatibility of the polymers.

Such a styrene block copolymer may suitably comprise 10-40 %(w/w) styrene and 60-90%(w/w) rubbery polymer such as polyisoprene, polybutadiene, poly(ethylenebutylene) or poly(ethylenepropylene). The block copolymer may comprise 0-100% diblock copolymer, the remains being threblock copolymer.

The adhesives of the present invention is typically a PIB-like adhesive or paste based on one or more amorphous poly-α-olefin and optionally one or more resins having -40°C<Tg<125°C, optionally a minor amount of plasticizer, e.g. polybutene of low to medium molecular weight, and optionally cohesion-enhancing rubbery material, typically a styrene blockcopolymer having a saturated or unsaturated center block or a butyl rubber/polyisobutylene having a high molecular weight.

When using SEBS, it is often necessary to make a pre-mixture of SEBS and partially aromatized resin as well as poly-α-olefin having a higher melting point in order to obtain a mixture, the melting viscosity of which matches the more low-viscous poly-α-olefin.

By a suitable combination of propylene/1-hexene and ethylene/propylene based polymers it is possible to provide adhesive compositions showing a very limited change of properties on sterilisation by radiation.

The combination of co or terpolymers of ethylene, propylene, and 1-butylene rich in propylene or butylene are compatible and conserves the cohesion after sterilisation by radiation. The combination amorphous poly-α-olefins and polyisobutylene on the contrary is unsuitable as they are not compatible and may give rise to phase separation.

It is preferred that the matrix is based on a polymer comprising ethylene and an aliphatic compound having 3-12 carbon atoms and one double bond and wherein the contents of ethylene is in the range fra 5 to 95%.

It is especially preferred as stated above that the further aliphatic compound having 3-12 carbon atoms and one double bond is selected from propylene 1-butene and 1-hexene.

An adhesive composition of the present invention may be based on a mixture of the various types of poly-α-olefins in any proportion desired.

The desirable properties of the adhesive compositions of the present invention may be obtained when the matrix is based on a polymer comprising propylene and an aliphatic compound having 4-12 carbon atoms and one double bond and wherein the contents of ethylene is in the range from 5 to 95%.

It is especially preferred that the further aliphatic compound having 4-12 carbon atoms and one double bond is selected from the group consisting of 1-butene, 1-hexene.

The adhesive compositions of the invention preferably comprise one or more amorphous poly-α-olefins having a molecular weight is in the range 10.000 -1,000,000.

In accordance with a preferred aspect of the invention, the adhesive composition comprises 5 - 50 % resin selected from hydrocarbon resins, hydrogenated hydrocarbon resins, terpenes, aromatically modificated derivatives thereof, rosins and hydrogenated rosins and esters and mixtures thereof.

The amount of hydrocolloids in the adhesive compositions of the invention is preferably comprise 10 - 60 % hydrocolloid component.

The hydrocolloid component is typically a gelatine. a hydrocolloid of cellulosic origin, e.g. carboxymethylcellulose, an alginate, a pectin or a mixture thereof.

Such mixture of hydrocolloids may be in any proportion.

The adhesive compositions of the invention may be used in general for adhesion to skin or mucosal membranes and may in the wound care for preparation of dressings being plastic or conformable and easy to adapt to the geometry of the specific site by the user. A more plastic adhesive composition will be easier to mould than the more elastic SIS-based adhesives.

Within the ostomy care, the adhesives based on poly-α-olefins will constitute an alternative to the PIB-based adhesives. In spite of the mainly amorphous structure and the derived plastic properties, it has surprisingly been found that the cold flow is clearly reduced as compared to the cold flow of a PIB-based adhesive having approximately the same adhesive properties. With respect to the plasticity, this constitutes a further advantage as the more plastic poly-α-olefins enables the preparation of more paste-like materials without having to rely on the modification using low-molecular oils or plasticizers which products demand sterilisation by physical means.

Furthermore, the adhesives of the invention based on poly-α-olefins may be used in the breast care for adhering breast prostheses to the skin of a human being.

It is advantageous that the adhesive area of a dressing or ostomy appliance comprising as adhesive according to the invention comprises wound healing associated indicator(s), cushions or similar device for treatment or prophylaxis of formation of wounds and/or skin anormalities.

This opens for a combined medical treatment of a wound and an easy and sterile application of the active ingredients, e.g. by incorporating active ingredients such as a cytokine such as growth hormone or a polypeptide growth factor giving rise to the incorporation of such active substances in a form being apt to local application in a wound in which the medicament may exercise its effect on the wound, other medicaments such as bacteriostatic or bactericide compounds, e.g. iodine, iodopovidone complexes, chloramine, chlorhexidine, silver salts, zinc or salts thereof, metronidazol, sulpha drugs, and penicillins, tissue-healing enhancing agents, e.g. RGD tripeptides and the like, enzymes for cleansing of wounds, e.g. pepsin, trypsin and the like as well as inhibitors for proteolytic enzymes, cytotoxic agents and proliferation inhibitors for use in for example surgical insertion of the product in cancer tissue and/or other therapeutic agents which optionally may be used for topical application, pain releasing agents, emollients, retinoids or agents having a cooling effect which is also considered an aspect of the invention.

Incorporation of wound healing associated indicators), cushions or similar device in ostomy appliances is advantagous for prophylaxis of formation of wounds and/or skin anormalities

Wound healing associated indicators) may e.g. be indicators of pH, partial pressure of O₂, temperature, radical mechanisms or biotechnological assays, e.g. indicating formation of collagen.

The adhesive compositions of the invention may be modified using tackifying resins, especially C₅-C₉ hydrocarbons as well as optionally copolymerisates comprising terpenes, hydrogenated as well as not-hydrogenated. As opposed to polyisobutylenes, the adhesives according to the invention inherently covers a wider range which influences the need of modification using resins.

In a further aspect the invention relates to a method for preparing a pressure sensitive adhesive composition containing hydrocolloids in the form of discrete particles and wherein the adhesive composition comprises a matrix comprising one or more amorphous poly-α-olefins, in which method the polymers are mixed until homogeneity, optionally resin is added and mixed into the polymer, whereafter the resulting mixture is mixed until homogeneity and plasticizer is optionally added at a rate ensuring a gradual increase of the viscosity during the mixing, optionally hydrocolloids are added and the resulting mixture mixed to homogeneity.

The invention also relates to an ostomy appliance comprising a pressure sensitive adhesive for securing the same to the side of an ostomate, said adhesive being an adhesive composition containing hydrocolloids in the form of discrete particles and wherein the adhesive composition comprises a matrix comprising one or more amorphous poly-α-olefins.

Still further, the invention relates to a wound dressing comprising a pressure sensitive adhesive composition containing hydrocolloids in the form of discrete particles and wherein the adhesive composition comprises a matrix comprising one or more amorphous poly-α-olefins.

In still another aspect, the invention relates to the use of one or more amorphous poly-α-olefins for the preparation of a pressure sensitive adhesive containing hydrocolloids in the form of discrete particles for use for securing of and sealing around ostomy bandages, for securing wound dressings, for securing of devices for collecting urine, wound-drainage bandages, orthoses and prostheses and for protection skin areas and parts of the body against pressure, impacts and friction.

### MATERIALS AND METHODS

### Materials

Amorphous poly-α-olefins: Coplomers and terpolymers of ethylene, propylene and 1-butylene available from Hüls Chemie: Butylene-rich amorphous poly-α-olefins VESTOPLAST 520 and 608 and propylene-rich amorphous poly-α-olefins VESTOPLAST 704 and 792; and propylene/ethylene copotymers E1003 and amorphous propylene/hexene copolymers D-127, D-161 and D-174 available from Eastman.

### Resins:

WINGTACK 10 and 95 (terpene-co-hydrocarbon tackyfier resins) and 86 (aromatically modified terpene-co-hydrocarbon tackyfier resin) from GOODYEAR Arkon P90 terpene resin from Arakawa

### Plasticizer:

Polybutene: Hyvis/Napkin 30 from BP Chemicals

Butyl 077: butyl rubber from Exxon.

Hydrocolloids of CMC type: Blanose® 9H4XF from Hercules Corp.

SEBS (Styrene-ethylenebutylene-styrene copolymer): Kraton® G1657 from Shell.

SEPTON 2043 (SEPS (Styrene-ethylenepropylene-styrene copolymer)) comprising 15% polystyrene from KURARAY i Japan.

Styrene-isoprene-styrene (SIS) copolymer Kraton® D1107 from Shell having a molecular weight of 212,000-260,000 as determined by GPC.

Polyisobutylene: Vistanex® LM-MH from Exxon having a molecular weight of 90,000 as determined by GPC.

### Test methods

The adhesives were tested for Peel against tubing for dialysis (300 mm/min) using an INSTRON Model 5564 Tensile Instrument.

Tack was tested against teflon using the same INSTRON Model 5564 Tensile Instrument.

Dynamic Mechanical Analysis was carried out using a RHEOMETRIC SCIENTIFIC Model ARES apparatus.

Absorption of water was tested using physiological saline (0.9% NaCI solution) by weighing the specimen, dipping the same in physiological saline at °C for 2 hours and reweigh the specimen and calculating the increase of weight. Sterilisation by radiation was carried out at 30 Kgy.

### EXPERIMENTAL PART

The invention is disclosed more in detail in the below examples describing embodiments of the invention. The examples are not to be considered limiting of the scope of the invention set forth in the appended claims.

### Example 1

### Preparation of an adhesive according to the invention comprising two amorphous poly-α-olefins, both based on Ethylene/Propylene.

| Ingredients | %(w/w) |
|---|---|
| VESTOPLAST 704 | 24.6 |
| VESTOPLAST 792 | 4.9 |
| Wingtack 95 | 21.5 |
| Hyvis 30 | 9.0 |
| CMC | 40 |

The polymers were mixed in a Z-blade mixer at 130°C until homogeneity (about 20 minutes). The resin was added slowly in order to ensure that it was gradually mixed into the polymer. The resulting mixture was mixed until homogeneity (for about 5 minutes) whereafter the plasticizer was added slowly over a period of about 10 minutes in order to ensure a gradual increase of the viscosity during the mixing. Finally, the hydrocolloids were added, and after mixing to homogeneity, mixing was continued under vacuum for 10 minutes. The adhesive was pressed at 120°C for 10 seconds to a thickness of 1 mm between two pieces of silicone paper. The Peel, Tack, Absorption of Water and Shear were determined, the adhesive was sterilised, and the Peel, Tack and Shear were re-determined. The results are stated in the below Table 1.

**Table 1**

| Determination of Peel, Tack, Shear and Absorption of Water before and after sterilisation | | |
|---|---|---|
| | Before Sterilisation | After Sterilisation |
| Peel (N/25 mm) | 19.5 | 26.3 |
| Tack (mJ/6 mmØ test probe) | 6.9 | 5.9 |
| Shear (mm/24 hours) | 2.0 | 1.0 |
| Absorption of Water* | 0.30 g/cm²/2h | n.d. |

| | | |
|---|---|---|
| * Swelling in one dimension | | |

### Example 2:

In an analogous manner as described in Example 1 an adhesive according to the invention comprising two amorphous poly-α-olefins, based on Ethylene/Propylene and Ethylene/Butylene, was prepared, having the composition stated below:

| Ingredients | % (w/w) |
|---|---|
| VESTOPLAST 704 | 24.6 |
| VESTOPLAST 408 | 4.9 |
| Wingtack 95 | 21.5 |
| Hyvis 30 | 9.0 |
| CMC | 40 |

The Peel, Tack. Absorption of Water and Shear were determined, the adhesive was sterilised, and the Peel, Tack and Shear were re-determined. The results are stated in the below Table 2.

**Table 2**

| Determination of Peel, Tack, Shear and Absorption of Water before and after sterilisation | | |
|---|---|---|
| | Before Sterilisation | After Sterilisation |
| Peel (N/25mm) | 12.6 | 16.3 |
| Tack (mJ/6 mmØ test probe) | 4.9 | 4.9 |
| Shear (mm/2 hours) | 0.5 | 0 |
| Absorption of Water* | 0.34 g/cm²/2h | n.d. |

| | | |
|---|---|---|
| * Swelling in one dimension | | |

### Example 3

In an analogous manner as described in Example 1 an adhesive according to the invention comprising one amorphous poly-α-olefin, based on Ethylene/Propylene and being an "intermediate" of the two ones used in Example 1, was prepared, having the composition stated below:

| Ingredients | % (w/w) |
|---|---|
| VESTOPLAST 750 | 29.5 |
| Wingtack 95 | 21.5 |
| Hyvis 30 | 9.0 |
| CMC | 40 |

The Peel, Tack, Absorption of Water and Shear were determined. The results are stated in the below Table 3.

**Table 3**

| Determination of Peel, Tack, Shear and Absorption of Water | |
|---|---|
| | Without Sterilisation |
| Peel (N/25 mm) | 74 |
| Tack (mJ/6 mmØ test probe) | 4.1 |
| Shear (mm/24 hours) | 0.5 |
| Absorption of Water# | 0.2 g/cm²/2h |

| | |
|---|---|
| # Swelling in three dimensions | |

### Example 4

In an analogous manner as described in Example 1 an adhesive according to the invention comprising two amorphous poly-α-olefins, based on Ethylene/Propylene and Ethylene/Butylene, and also comprising a SEBS copolymer for improving cohesion, was prepared, having the composition stated below:

| Ingredients | % (w/w) |
|---|---|
| Kraton® G1657 | 3.3 |
| VESTOPLAST 608 | 3.3 |
| VESTOPLAST 704 | 24.6 |
| Wingtack 86 | 3.3 |
| Wingtack 95 | 21.5 |
| Hyvis 30 | 9.0 |
| CMC | 40 |

A premix comprising the SEBS and amorphous poly-α-olefins was made and mixed with polybutene and hydrocolloids as in an analogous manner as stated in Example 1.

### Example 5

In an analogous manner as described in Example 1 an adhesive according to the invention comprising two amorphous poly-α-olefins, based on Ethylene/Propylene and Ethylene/Butylene, and also comprising a plasticizing terpene hydrocarbon resin having a low T_{G} was prepared, having the composition stated below:

| Ingredients | % (w/w) |
|---|---|
| VESTOPLAST 704 | 20.9 |
| VESTOPLAST 792 | 4.9 |
| Wingtack 95 | 21.5 |
| Wingtack 10 | 3.6 |
| Hyvis 30 | 9.1 |
| Blanose | 40.0 |

The Peel, Tack, Absorption of Water and Shear were determined. The results are stated in the below Table 4.

**Table 4**

| Determination of Peel, Tack, Shear and Absorption of Water | |
|---|---|
| | Without Sterilisation |
| Peel (N/25 mm) | 20.9 |
| Tack (mJ/6 mmØ test probe) | 10.3 |
| Shear (mm/24 hours) | n.d. |
| Absorption of Water* | 0.32 g/cm²/2h |

| | |
|---|---|
| * Swelling in one dimension | |

### Example 6

In an analogous manner as described in Example 1 an adhesive according to the invention comprising one amorphous poly-α-olefin, based on Ethylene/Propylene, and also comprising an SIS copolymer improving the tack and peel-resistance of the adhesive was prepared, having the composition stated below:

| Ingredients | % (w/w) |
|---|---|
| VESTOPLAST 704 | 24.6 |
| Kraton® D1107 | 4.9 |
| Wingtack 95 | 21.5 |
| Hyvis 30 | 9.0 |
| CMC | 40 |

The Peel, Tack, Absorption of Water and Shear were determined. The results are stated in the below Table 5.

**Table 5**

| Determination of Peel, Tack, Shear and Absorption of Water | |
|---|---|
| | Without Sterilisation |
| Peel (N/25 mm) | 36.4 |
| Tack (mJ/6 mmØ test probe) | >24 |
| Shear (mm/24 hours) | n.d. |
| Absorption of Water* | 0.35 g/cm²/2h |

| | |
|---|---|
| * Swelling in one dimension | |

### Example 7

In an analogous manner as described in Example 1 an adhesive according to the invention comprising two amorphous poly-α-olefins, based on Ethylene/Propylene and Ethylene/hexene, having the composition stated below

| Ingredients | % (w/w) |
|---|---|
| EASTOFLEX 1003 | 29.0 |
| EASTOFLEX D-127 | 5.8 |
| Wingtack 95 | 25.2 |
| CMC | 40.0 |

The Absorption of Water was determined. The results are stated below : Absorption of Water: 0.35 g/cm²/2h

The resulting adhesive was very plastic and had a low cohesion which renders it suitable for use as a plastic adhesives and for pastes, e.g. for sealing around a stoma.

### Example 8

In an analogous manner as described in Example 1 an adhesive according to the invention comprising one amorphous poly-α-olefin, based on Propylene/Hexene and a resin having a low T_{G}, was prepared, having the composition stated below:

| Ingredients | % (w/w) |
|---|---|
| EASTOFLEX D-127 | 48.0 |
| Wingtack 10 | 12.0 |
| CMC | 40.0 |

The Peel, Absorption of Water and Shear were determined. The results are stated in the below Table 6.

**Table 6**

| Determination of Peel, Shear and Absorption of Water | |
|---|---|
| | Without Sterilisation |
| Peel(N/) | 18.0 |
| Tack (mJ/6 mmØ test probe) | n.d |
| Shear (mm/24 hours) | >25 |
| Absorption of Water* | 0.36 g/cm²/2h |

| | |
|---|---|
| * Swelling in one dimension | |

In Examples 9 - 11 adhesives of the present invention are compared with conventional PIB-based adhesives.

### Example 9

In an analogous manner as described in Example 1 an adhesive according to the invention comprising two amorphous poly-α-olefins, based on a high-molecular-weight Ethylene/Propylene and a low-molecular-weight Ethylene/Hexene, and also comprising a plasticizing terpene hydrocarbon resin having a low T_{G} was prepared having the composition stated below. This adhesive was compared with a conventional PIB-based adhesive having the composition stated below:

| Adhesive according to invention | | PIB-based adhesive | |
|---|---|---|---|
| Ingredients | % (w/w) | Ingredients | % (w/w) |
| EASTOFLEX D-127 | 36.4 | LM-MH | 30.0 |
| VESTOPLAST 792 | 11.6 | Butyl 077 | 15.0 |
| Wingtack 10 | 12.0 | Arkon P90 | 10.0 |
| CMC | 40.0 | CMC+pectin +gelatin | 45.0 |

The Peel, Absorption of Water and Shear after 6 and 24 hours were determined, for both adhesives, the adhesives were sterilised, and the Peel and Shear after 6 and 24 hours were re-determined. The results are stated in the below Table 7.

**Table 7**

| Determination of Peel, Shear after 6 and 24 hours and Absorption of Water before and after sterilisation | | | | |
|---|---|---|---|---|
| Adhesive | Before Sterilisation | | After Sterilisation | |
| | Invention | PIB | Invention | PIB |
| Peel (N/25 mm) | 10.2 | 12 | | 17.3 |
| Shear (mm/6 hours) | 0 | | 0 | |
| Shear (mm/ 24 hours) | 0.6 | >25 | 3 | >25 |
| Absorption of Water | 0.2g/cm²/2h | 0.17 g/cm²/2h | n.d. | n.d. |

### Example 10

In an analogous manner as described in Example 1 an adhesive according to the invention comprising two amorphous poly-α-olefins, based on a high-molecular-weight Ethylene/Propylene and a low-molecular-weight Ethylene/Hexene, was prepared having the composition stated below. This adhesive was compared with a conventional PIB-based adhesive having the composition stated below:

These adhesives correspond to the adhesives of Example 9, but without a plasticizing terpene hydrocarbon resin having a low T_{G}.

| Adhesive according to invention | | PIB-based adhesive | |
|---|---|---|---|
| Ingredients | % (w/w) | Ingredients | % (w/w) |
| EASTOFLEX D-174 | 48.4 | LM-MH | 40% |
| VESTOPLAST 792 | 11.6 | CMC+Pectin+Gelatin | 60% |
| CMC | 40.0 | | |

The Peel, Absorption of Water and Shear after 6 and 24 hours were determined, for both adhesives, the adhesives were sterilised, and the Peel and Shear after 6 and 24 hours were re-determined. The results are stated in the below Table 8.

**Table 8**

| Determination of Peel, Shear after 6 and 24 hours and Absorption of Water before and after sterilisation | | | | |
|---|---|---|---|---|
| Adhesive | Before Sterilisation | | After Sterilisation | |
| | Invention | PIB | Invention | PIB |
| Peel (N/25 mm) | 9.1 | 5.2 | 9.9 | 6.1◊ |
| Shear (mm/6 hours) | 0.5 | 2.0 | 0 | >25 |
| Shear (mm/ 24 hours) | 1.2 | >25 | 2.0 | >25 |
| Absorption of Water | 0.14g/cm²/2h | 0.30 g/cm²/2h | n.d. | n.d. |

| | | | | |
|---|---|---|---|---|
| ◊ comes off | | | | |

### Example 11

In an analogous manner as described in Example 1 an adhesive according to the invention comprising two amorphous poly-α-olefins, based on a high-molecular-weight Ethylene/Propylene and a low-molecular-weight Ethylene/Hexene, and also comprising a plasticizing terpene hydrocarbon resin having a low T_{G} and carboxymethylcellulose as hydrocolloid was prepared having the composition stated below.

| Ingredients | % (w/w) |
|---|---|
| EASTOFLEX D-174 | 56.0 |
| Vestoplast 792 | 4.0 |
| CMC | 40.0 |

The Peel, Absorption of Water and Shear after 6 and 24 hours were determined, for both adhesives, the adhesives were sterilised, and the Peel and Shear after 6 and 24 hours were re-determined. The results are stated in the below Table 9.

**Table 9**

| Determination of Peel, Shear after 6 and 24 hours and Absorption of Water before and after sterilisation | | |
|---|---|---|
| | Before Sterilisation | After Sterilisation |
| Peel (N/25 mm) | 16.0 | 22.0 |
| Shear (mm/ 6 hours) | 0 | 0 |
| Shear (mm/ 24 hours) | 2.5 | 1.5 |
| Absorption of Water | 0.32g/cm²/2h | n.d. |

### Example 12

In an analogous manner as described in Example 1 an adhesive according to the invention comprising two amorphous poly-α-olefins, based on a high-molecular-weight Ethylene/butene and a low-molecular-weight Ethylene/Hexene, and also comprising a plasticizing terpene hydrocarbon resin having a low T_{G} and carboxymethylcellulose as hydrocolloid was prepared having the composition stated below.

| Ingredients | % (w/w) |
|---|---|
| EASTOFLEX D-174 | 56.0 |
| Vestoplast 520 | 4.0 |
| CMC | 40.0 |

The Peel, Absorption of Water and Shear after 6 and 24 hours were determined, for both adhesives, the adhesives were sterilised, and the Peel and Shear after 6 and 24 hours were re-determined. The results are stated in the below Table 10.

**Table 10.**

| Determination of Peel, Shear after 6 and 24 hours and Absorption of Water before and after sterilisation | | |
|---|---|---|
| | Before Sterilisation | After Sterilisation |
| Peel (N/25 mm) | 12.9 | 14.5 |
| Shear (mm/6 hours) | 0 | 0 |
| Shear (mm/ 24 hours) | 3.0 | 2.0 |
| Absorption of Water | 0.30g/cm²/2h | n.d. |

### Examples 13-16

In an analogous manner as described in Example 4 adhesive compositions according to the invention having the compositions stated in the below Table 11 were produced.

**Table 11**

| Ingredient % | Example 13 | Example 14 | Example 15 | Example 16 |
|---|---|---|---|---|
| SEPTON 2043 | 4.5 | 8.4 | 7.2 | 8.4 |
| Eastoflex E1003 | 31.5 | 33.6 | 28.9 | 33.6 |
| Wingtack 95 | 24.0 | 18.0 | 24.0 | 18.0 |
| Aquasorb A500 | | | | 30.0 |
| CMC-Blanose | 40.0 | 40.0 | 40.0 | 10.0 |

The Peel, Absorption of Water and Shear after 6 and 24 hours were determined, for both adhesives, the adhesives were sterilised, and the Peel and Shear after 6 and 24 hours were re-determined. The results are stated in the below Tables 12 - 15.

**Table 12**

| Determination of Peel, Shear after 6 and 24 hours and Absorption of Water before and after sterilisation | | |
|---|---|---|
| Example 13 | Before Sterilisation | After Sterilisation |
| Peel (N/25 mm) | n.d. | n.d. |
| Shear (mm/6 hours) | n.d | n.d. |
| Shear (mm/ 24 hours) | n.d. | n.d. |
| Absorption of Water | 0.30g/cm²/2h | n.d. |

**Table 13**

| Determination of Peel, Shear after 6 and 24 hours and Absorption of Water before and after sterilisation | | |
|---|---|---|
| Example 14 | Before Sterilisation | After Sterilisation |
| Peel (N/25 mm) | 39.0 | 36.0 |
| Shear (mm/6 hours) | 0 | 0.5 |
| Shear (mm/ 24 hours) | 1.5 | 3.0 |
| Absorption of Water | 0.27g/cm²/2h | 0.1g/cm²/2h |

**Table 14**

| Determination of Peel, Shear after 6 and 24 hours and Absorption of Water before and after sterilisation | | |
|---|---|---|
| Example 15 | Before Sterilisation | After Sterilisation |
| Peel (N/25 mm) | 42.0 | n.d. |
| Shear (mm/6 hours) | 0.5 | 1.0 |
| Shear (mm/ 24 hours) | 5.0 | 7.0 |
| Absorption of Water | 0.28g/cm²/2h | 0.1g/cm²/2h |

**Table 15**

| Determination of Peel, Shear after 6 and 24 hours and Absorption of Water before and after sterilisation | | |
|---|---|---|
| Example 16 | Before Sterilisation | After Sterilisation |
| Peel (N/25 mm) | 19.0 | 23.0 |
| Shear (mm/6 hours) | 0 | 0.5 |
| Shear (mm/ 24 hours) | 2.5 | 3.5 |
| Absorption of Water | 0.29g/cm²/2h | 0.22g/cm²/2h |

## Claims

1. A pressure sensitive adhesive composition containing hydrocolloids in the form of discrete particles, **characterised in that** the adhesive composition comprises a matrix comprising one or more amorphous poly-α-olefins.

2. An adhesive composition as claimed in claim 1, **characterised in that** the matrix is based on a polymer comprising ethylene and an aliphatic compound having 3-12 carbon atoms and one double bond and wherein the contents of ethylene is in the range from 5 to 95%..

3. An adhesive composition as claimed in claim 2, **characterised in that** the further aliphatic compound having 3-12 carbon atoms and one double bond is selected from propylene, 1-butene and 1-hexene.

4. An adhesive composition as claimed in claim 1, **characterised in that** the matrix is based on a polymer comprising propylene and an aliphatic compound having 4-12 carbon atoms and one double bond and wherein the contents of ethylene is in the range from 5 to 95%.

5. An adhesive composition as claimed in claim 4, **characterised in that** the further aliphatic compound having 4-12 carbon atoms and one double bond is selected from the group consisting of 1-butene, 1-hexene.

6. An adhesive composition as claimed in any of claims 1 - 5, **characterised in that** it comprises 5 - 50 % resin selected from hydrocarbon resins, hydrogenated hydrocarbon resins, terpenes, aromatically modificated derivatives thereof, rosins and estersand mixtures thereof.

7. An adhesive composition as claimed in any of claims 1 - 6, **characterised in that** it comprises 10 - 60 % hydrocolloid component.

8. An adhesive composition as claimed in any of claims 1 - 7, **characterised in that** it comprises an antibacterial agent.

9. A method for preparing a pressure sensitive adhesive composition containing hydrocolloids in the form of discrete particles and wherein the adhesive composition comprises a matrix comprising one or more amorphous poly-α-olefins, characterised in that
the polymers are mixed until homogeneity, optionally resin is added and mixed into the polymer, whereafter the resulting mixture is mixed until homogeneity and plasticizer is optionally added at a rate ensuring a gradual increase of the viscosity during the mixing, optionally hydrocolloids are added and the resulting mixture mixed to homogeneity.

10. Use of one or more amorphous poly-α-olefins for the preparation of an adhesive composition containing hydrocolloids in the form of discrete particles wherein the adhesive composition comprises a matrix comprising one or more amorphous poly-α-olefins for use for securing of and sealing around ostomy bandages, for securing wound dressings, for securing of devices for collecting urine, wound-drainage bandages, orthoses and prostheses and for protection skin areas and parts of the body against pressure, impacts and friction.

## Patentansprüche

1. Druckempfindliche Kleberzusammensetzung, die Hydrokolloide in Form diskreter Partikel enthält, **dadurch gekennzeichnet, dass** die Kleberzusammensetzung eine Matrix aufweist, die ein oder mehrere amorphe Poly-α-olefine enthält.

2. Kleberzusammensetzung nach Anspruch 1, **dadurch gekennzeichnet, dass** es sich um eine Matrix auf der Basis eines Polymers handelt, das Ethylen und eine aliphatische Verbindung mit 3 bis 12 Kohlenstoffatomen und einer Doppelbindung enthält, wobei der Ethylenanteil im Bereich von 5 bis 95 % liegt.

3. Kleberzusammensetzung nach Anspruch 2, **dadurch gekennzeichnet, dass** die weiter vorhandene aliphatische Verbindung mit 3 bis 12 Kohlenstoffatomen und einer Doppelbindung unter Propylen, 1-Buten und 1-Hexen ausgewählt ist.

4. Kleberzusammensetzung nach Anspruch 1, **dadurch gekennzeichnet, dass** es sich um eine Matrix auf der Basis eines Polymers handelt, das Propylen und eine aliphatische Verbindung mit 4 bis 12 Kohlenstoffatomen und einer Doppelbindung enthält, wobei der Ethylenanteil im Bereich von 5 bis 95 % liegt.

5. Kleberzusammensetzung nach Anspruch 4, **dadurch gekennzeichnet, dass** die weitere aliphatische Verbindung mit 4 bis 12 Kohlenstoffatomen und einer Doppelbindung unter 1-Buten und 1-Hexen ausgewählt ist.

6. Kleberzusammensetzung nach einem der Ansprüche 1 bis 5, **dadurch gekennzeichnet, dass** sie 5 bis 50 % Harz enthält, das ausgewählt ist unter Kohlenwasserstoffharzen, hydrierten Kohlenwasserstoffharzen, Terpenen, aromatisch modifizierten Derivaten davon, Kolophoniumharzen und Estern sowie Gemischen dieser Verbindungen.

7. Kleberzusammensetzung nach einem der Ansprüche 1 bis 6, **dadurch gekennzeichnet, dass** sie 10 bis 60 % Hydrokolloidkomponente enthält.

8. Kleberzusammensetzung nach einem der Ansprüche 1 bis 7, **dadurch gekennzeichnet, dass** sie ein antibakterielles Mittel enthält.

9. Verfahren zur Herstellung einer druckempfindlichen Kleberzusammensetzung, die Hydrokolloide in Form diskreter Partikel enthält, wobei die Kleberzusammensetzung eine Matrix aufweist, die ein oder mehrere amorphe Poly-α-olefine enthält, **gekennzeichnet durch** Mischen der Polymeren bis zur Homogenität, wahlweise Zugabe von Harz und Einmischen in das Polymer, anschließendes Mischen des resultierenden Gemisches bis zur Homogenität, wahlweise Zugabe eines Weichmachers mit einer Geschwindigkeit, die eine allmähliche Erhöhung der Viskosität während des Mischens gewährleistet, wahlweise Zugabe von Hydrokolloiden und Mischen des resultierenden Gemisches bis zur Homogenität.

10. Verwendung von einem oder mehreren amorphen Poly-α-olefinen zur Herstellung einer Kleberzusammensetzung, die Hydrokolloide in Form diskreter Partikel enthält, wobei die Kleberzusammensetzung eine Matrix aufweist, die ein oder mehrere amorphe Poly-α-olefine enthält, zur Verwendung zur sicheren Befestigung und zur Randabdichtung von Stomaverbänden, zur sicheren Befestigung von Wundverbänden, zur sicheren Befestigung von Vorrichtungen zum Urinsammeln, von Wunddrainageverbänden, Orthesen und Prothesen sowie zum Schutz von Hautbereichen und Körperteilen gegen Druck, Stöße und Reibung.

## Revendications

1. Composition adhésive sensible à la pression contenant des hydrocolloïdes sous la forme de particules discrètes, **caractérisée en ce que** la composition adhésive comprend une matrice comprenant une ou plusieurs poly-α-oléfines amorphes.

2. Composition adhésive selon la revendication 1, **caractérisée en ce que** la matrice est basée sur un polymère comprenant de l'éthylène et un composé aliphatique possédant 3 à 12 atomes de carbone et une double liaison et dans lequel la teneur en éthylène est comprise dans la plage allant de 5 à 95%.

3. Composition adhésive selon la revendication 2, **caractérisée en ce que** le composé aliphatique supplémentaire possédant 3 à 12 atomes de carbone et une double liaison est sélectionnée à partir du propylène, du 1-butène et du 1-hexène.

4. Composition adhésive selon la revendication 1, **caractérisée en ce que** la matrice est basée sur un polymère comprenant du propylène et un composé aliphatique possédant 4 à 12 atomes de carbone et une double liaison et dans lequel la teneur en éthylène est comprise dans la plage allant de 5 à 95%.

5. Composition adhésive conforme à la revendication 4, **caractérisée en ce que** le composé aliphatique supplémentaire possédant 4 à 12 atomes de carbone et une double liaison est sélectionnée à partir du groupe consistant en 1-butène, 1-hexène.

6. Composition adhésive selon l'une quelconque des revendications 1 à 5, **caractérisée en ce qu'**elle comprend 5 à 50% de résine choisie à partir de résines à base d'hydrocarbures, de résines à base d'hydrocarbures hydrogénées, de terpènes, de dérivés aromatiquement modifiés de ces derniers ,de colophanes et d'esters, et leurs mélanges.

7. Composition adhésive selon l'une quelconque des revendications 1 à 6, **caractérisée en ce qu'**elle comprend un composant hydrocolloïde allant de 10 à 60%.

8. Composition adhésive selon l'une quelconque des revendications 1 à 7, **caractérisée en ce qu'**elle comprend un agent antibactérien.

9. Procédé pour la préparation d'une composition adhésive sensible à la pression contenant des hydrocolloïdes sous la forme de particules discrètes et dans lequel la composition adhésive comprend une matrice comprenant une ou plusieurs poly-α-oléfines amorphes, **caractérisé en ce que** les polymères sont mélangés jusqu'à leur homogénéité, de la résine est ajoutée en option et mélangée au polymère, sur quoi le mélange résultant est mélangé jusqu'à son homogénéité et du plastifiant est ajouté en option à une cadence permettant d'assurer une augmentation graduelle de la viscosité au cours du mélange, des hydrocolloïdes sont ajoutés en option et le mélange résultant mélangé jusqu'à son homogénéité.

10. Utilisation d'une ou plusieurs poly-α-oléfines amorphes pour la préparation d'une composition adhésive contenant des hydrocolloïdes sous la forme de particules discrètes dans laquelle la composition adhésive comprend une matrice comprenant une ou plusieurs poly-α-oléfines amorphes à utiliser pour la fixation et l'étanchéité des bandages d'ostomie, pour la fixation des pansements de plaies, pour la fixation des dispositifs collecteurs d'urine, des bandages de drains de plaies, des orthoses et des prothèses et pour la protection des régions cutanées et des parties du corps contre la pression, les impacts et le frottement.
